# EUROPÄISCHE PATENTANMELDUNG

(11) **EP 0 761 422 A2**
(43) Veröffentlichungstag der Anmeldung: **12.03.1997**
(21) Anmeldenummer: 96113664.5
(22) Anmeldetag: 27.08.1996
(51) Int. Cl.: B29D 31/508

(54) **Verfahren zur Herstellung eines Schuhs mit angespritzter Sohle und daraus hergestellter Schuh**

(30) Priorität: 05.09.1995 DE 19532710
(71) Anmelder: Akzo Nobel N.V., NL-6824 BM Arnhem (NL)
(72) Erfinder: Pavelescu, Liviu-Mihai, 44229 Dortmund (DE); Haderlein, Manfred, 42781 Haan (DE)
(74) Vertreter: Fett, Günter

(57) **Zusammenfassung**

Verfahren zur Herstellung eines Schuhs, der zumindest aus einer Oberschicht (1) und einer an die Oberschicht (1) angespritzten Sohle (7) besteht, wobei die Oberschicht (1) geformt und zumindest ein Teil der zur Sohlenseite hin gewandten Oberschicht (1) zur Formhaltung mit einem Flächengebilde verbunden wird, und wobei ein Material für die anzuspritzende Sohle (7) derart auf eine Temperatur T1 erhitzt wird, daß es in den flüssigen Zustand überführt ist, und wobei das in flüssigen Zustand überführte Material als Sohle (7) angespritzt und dann abgekühlt wird, dadurch gekennzeichnet, daß als Flächengebilde ein solches ausgewählt wird, welches eine Schmelztemperatur T2 aufweist, die kleiner als T1 ist, und daß nach dem Verbinden dieses Flächengebildes mit der Oberschicht (1) die Sohle (7) mit dem auf Temperatur T1 erhitzten Material derart angespritzt wird, daß das mit der Oberschicht (1) verbundene Flächengebilde schmilzt. Das Verfahren ist besonders günstig auf die Herstellung von Schuhen anwendbar, die ein Futter (2) mit einer wasserdichten, wasserdampfdurchlässigen Funktionsschicht aufweisen.

## Beschreibung

Die Erfindung betrifft ein verfahren zur Herstellung eines Schuhs, der zumindest aus einer Oberschicht und einer an die Oberschicht angespritzten Sohle besteht, wobei die Oberschicht geformt und zumindest ein Teil der zur Sohlenseite hin gewandten Oberschicht zur Formhaltung mit einem Flächengebilde verbunden wird, und wobei ein Material für die anzuspritzende Sohle derart auf eine Temperatur T1 erhitzt wird, daß es in den flüssigen Zustand überführt ist, und wobei das in flüssigen Zustand überführte Material als Sohle angespritzt und dann abgekühlt wird. Die Erfindung betrifft auch Schuhe, die nach einem solchen Verfahren hergestellt sind

Derartige Verfahren zur Herstellung sind seit beispielsweise aus EP-A-0 594 029, DE-A-43 34 971, DE-A-44 19 802 oder DE-A-38 21 602 bekannt. Bei diesen bekannten Verfahren wird eine sogenannte Brandsohle zur Formgebung des zur Sohlenseite hin gerichteten Teils des Obermaterials eingesetzt, welche mit dem Obermaterial verbunden wird. Im Falle von angespritzten Schuhen muß das Brandsohlenmaterial mit dem Sohlenmaterial derart abgestimmt werden, daß sichergestellt ist, daß das Sohlenmaterial nach dem Anspritzen sicher und dicht an der Brandsohle anhaftet. Hieraus ergibt sich, daß die Brandsohle ihre eigentliche Aufgabe der Formhaltung des Obermaterials nach dem Anspritzen der Sohle nicht mehr erfüllen muß. Dennoch wird der überwiegende Teil der Schuhe mit angespritzter Sohle heute noch mit einer Brandsohle ausgerüstet. Da die Brandsohle relativ dick und auch steif ist, ist das Verbinden der Brandsohle mit dem Obermaterial, welches in der Regel über Nähen, bei der Schuhherstellung als Strobeln bezeichnet, erfolgt, sehr aufwendig, da zum Durchstoßen der Brandsohle mit der Nähnadel hohe Kräfte erforderlich sind.

Aufgabe der vorliegenden Erfindung ist es, das eingangs genannte Herstellverfahren zu vereinfachen, sowie einfach herstellbare Schuhe zur Verfügung zu stellen.

Diese Aufgabe wird bei dem eingangs genannten Verfahren dadurch gelöst, daß als Flächengebilde ein solches ausgewählt wird, welches eine Schmelztemperatur T2 aufweist, die kleiner als T1 ist, und daß nach dem Verbinden dieses Flächengebildes mit der Oberschicht die Sohle mit dem auf Temperatur T1 erhitzten Material derart angespritzt wird, daß das mit der Oberschicht verbundene Flächengebilde schmilzt.

In einigen Fällen genügt es, wenn als Flächengebilde ein schmaler Streifen ausgewählt wird, welcher das Obermaterial an der kritischen Stelle, dem Gelenkbereich, in Form hält. Das Flächengebilde kann aber auch größere Bereich der Fußseite des Schuhschaftes, beispielsweise den Bereich zwischen Gelenkbereich und Spitze oder den Gelenkbereich bis zur Ferse abdecken. Es ist aber auch möglich den gesamten Sohlenbereich mit dem Flächengebilde abzudecken, wobei jeweils entlang der Außenkante des Flächengebildes eine Verbindung mit dem Obermaterial hergestellt wird.

Nach der erfindungsgemäßen Herstellung der Schuhe hat das bei der Herstellung verwendete Flächengebilde seine bis zum Anspritzen der Sohle vorhandene Konsistenz verloren und liegt im fertigen Schuh entweder fein verteilt im Sohlenmaterial eingebettet vor oder bildet eine Klebeschicht auf der Innenseite der Sohle, auf welcher beispielsweise eine Einlegesohle angeklebt sein kann.

Das Flächengebilde kann wesentlich dünner ausgebildet werden als die bisher vorgesehene Brandsohle, so daß ein nach dem erfindungsgemäßen Verfahren hergestellter Schuh deutlich leichter ist als ein herkömmlicher Schuh, weshalb der Tragekomfort dieser Schuhe deutlich verbessert ist. Die Halterung zwischen Sohle und Obermaterial erfolgt ausschließlich durch die beim Anspritzen des Sohlenmaterial erfolgte Verklebung, wobei es sich herausgestellt hat, daß diese Halterung auch bei extremer Beanspruchung der erfindungsgemäß hergestellten Schuhe ausreichend ist. Dadurch, daß das Sohlenmaterial die Unterkante des Obermaterials sicher umfaßt, ist diese Verbindung auch wasserdicht.

Sofern das Flächengebilde beim Auftreffen des heißen Sohlenspritzmaterials sehr schnell in den Schmelzezustand überführt wird, hat es sich bewährt, wenn die Oberschicht während des Anspritzens der Sohle von außen auf Form gehalten wird. Dies läßt sich beispielsweise durch entsprechende Ausbildung der zum Anspritzen der Sohle verwendeten Spritzgießform durchführen. Besonders vorteilhaft ist es hierbei, wenn zum Anspritzen der Sohle eine Spritzgießform eingesetzt wird, die so ausgebildet ist, daß das flüssige Sohlenmaterial zunächst von außen an die Oberschicht herangeführt wird, so daß das Sohlenmaterial selbst das Obermaterial bis zur Aushärtung der Sohle auf Form hält. Das flüssige Sohlenmaterial füllt hierbei den Raum zwischen Obermaterial und der Wandung der Spritzgießform aus und hält aufgrund des beim Anspritzen verwendeten Drucks das Obermaterial elastisch auf Form. Ein Verschieben des Obermaterials nach innen wird durch den beim Anspritzen verwendeten Leisten vermieden.

Das erfindungsgemäße Herstellverfahren gelingt vorzüglich, wenn für das Flächengebilde ein poröses, vom Sohlenmaterial durchdringbares Flächengebilde ausgewählt wird. Hierdurch kann das heiße, flüssige Sohlenmaterial das Flächengebilde durchdringen, wodurch das Aufschmelzen durch das allseitig an dem Flächengebilde angreifende Sohlenmaterial besonders rasch gelingt, so daß das Aufschmelzen des Flächengebildes bereits abgeschlossen ist, bevor das Erkalten des Sohlenmaterials einsetzt. Um ein Verkleben des Sohlenmaterials mit dem beim Anspritzen im Schuh vorhandenen Leisten zu vermeiden, kann beispielsweise auf den Leisten ein Trennmittel aufgetragen sein. Eine weitere Möglichkeit ist beispielsweise dadurch gegeben, daß zwischen Leisten und Flächengebilde eine Einlegesohle eingelegt wird. Durch entsprechende Ausbildung des Leistens auf der zur Laufsohle gerichteten Seite, kann die angespritzte Sohle zur Innenseite hin einfach gestaltet werden, so daß sich auf einfache Weise einen hohen Komfort aufweisendes Fußbett ausbilden läßt, welches nach herkömmlichen Methoden nachträglich in den Schuh eingebracht werden muß.

Das erfindungsgemäße Verfahren gelingt vorzüglich, wenn für das Flächengebilde ein Flächengebilde, welches das Flächengebilde durchdringende Öffnungen aufweist, ausgewählt wird. Günstig ist es, wenn diese Öffnungen gleichmäßig verteilt im Flächengebilde angeordnet sind. Es hat sich bestens bewährt, wenn für das Flächengebilde ein Flächengebilde aus einem thermoplastischen Material ausgewählt wird.

Besonders günstig ist es, wenn als Flächengebilde ein Netz oder ein textiles Flächengebilde ausgewählt wird. Hierzu kommen als textile Flächengebilde Gewebe, Gewirke, Vliese und andere Flächengebilde, die Fäden oder Garne enthalten, in Frage. Diese Flächengebilde weisen auch bei geringer Dicke die zur Formgebung des Obermaterials erforderliche Festigkeit auf.

Wie auch bei herkömmlichen Methoden mit Brandsohle hat es sich bestens bewährt, wenn auch bei Anwendung des erfindungsgemäßen Verfahrens zur Verbindung das Flächengebilde mit der Oberschicht vernäht wird. Allerdings kann dieses Nähverfahren oder Strobeln mit wesentlich geringerem Aufwand durchgeführt werden als bei Verwendung der bisher üblichen Brandsohle, da das für das erfindungsgemäße Verfahren ausgewählte Flächengebilde deutlich dünner ausgebildet werden kann als die bisher verwendete Brandsohle und somit von der Nähnadel leichter durchdrungen werden kann.

Besonders günstig ist es hierbei, wenn zum Vernähen des Flächengebildes mit der Oberschicht ein Nähfaden verwendet wird, dessen Schmelztemperatur T3 kleiner ist, als die Temperatur T1 des flüssigen Materials beim Anspritzen der Sohle. Beim Anspritzen der Sohle verliert dann nicht nur das Flächengebilde sondern auch der Nähfaden seine Konsistenz, wodurch insbesondere bei Schuhen, die bei ihrem Einsatz hoher Beanspruchung ausgesetzt sind, eine innige Verbindung des Sohlenmaterials mit dem Obermaterial gewährleistet werden kann.

Es hat sich bewährt, wenn die Schmelztemperatur T3 des Nähfadens mindestens 5 ºC niedriger eingestellt wird als die Temperatur T1 des Sohlenmaterials beim Anspritzen, insbesondere wenn die Schmelztemperatur T3 des Nähfadens zwischen 10 und 25 ºC niedriger eingestellt wird als die Temperatur T1 des Sohlenmaterials beim Anspritzen.

Ebenso ist es günstig, wenn die Schmelztemperatur T2 des Flächengebildes mindestens 5 ºC, bevorzugt zwischen 8 und 25 ºC, niedriger eingestellt wird als die Temperatur T1 des Sohlenmaterials beim Anspritzen.

Als Material für das Flächengebilde und/oder den Nähfaden haben sich Polyäthylen, Polypropylen, Polyester oder Polyamid bestens bewährt.

Als Material für die Sohle kann beispielsweise ein Polyurethan ausgewählt werden, welches bei Temperaturen im Bereich von 140 bis 150 ºC flüssig ist und dabei die zum Anspritzen erforderliche Konsistenz mit entsprechender Viskosität aufweist. Wird ein auf 140 bis 150 ºC erhitztes Polyurethan zum Anspritzen der Sohle eingesetzt, hat es sich bestens bewährt, für das Flächengebilde ein Material mit einem Schmelzpunkt oder Schmelzbereich auszuwählen, welcher zwischen 120 bis 140 ºC, auf jeden Fall unterhalb der Temperatur des spritzfertigen Polyurethans, liegt. Polyäthylene oder Polypropylene mit einer Schmelztemperatur im besagten Bereich haben sich deshalb bestens für das Flächengebilde bewährt.

Das erfindungsgemäße Verfahren eignet sich insbesondere zur Herstellung von Schuhen, deren Futter eine wasserdichte, aber wasserdampfdurchlässige Funktionsschicht enthält. Bei solchen Schuhen ist die Gewährleistung der Wasserdichtigkeit an allen Stellen von großer Bedeutung. Gleichzeitig ist durch die Wasserdampfdurchlässigkeit der Funktionsschicht, die auf dem Markt beispielsweise unter dem Warenzeichen SYMPATEX angeboten wird, ein hoher Komfort gewährleistet, weil durch die Wasserdampfdurchlässigkeit der Schuhe ein Schwitzen des Benutzers im Fußbereich deutlich reduziert wird.

Das erfindungsgemäße Verfahren zeichnet sich deshalb besonders dadurch aus, daß auf der Innenseite des Obermaterials ein Futter, welches eine wasserdichte, wasserdampfdurchlässige Funktionsschicht enthält, derart angeordnet wird, daß das Futter mit der Funktionschicht die Oberschicht in Richtung der Sohle überragt, daß das überragende Ende des Futters mit der Funktionsschicht nach innen umgeschlagen wird, bevor das Flächengebilde mit der Oberschicht verbunden wird, und daß das Anspritzen der Sohle derart erfolgt, daß das umgeschlagene Ende des Futters mit der Funktionsschicht mit dem erschmolzenen Flächengebilde und/oder mit dem Sohlenmaterial nach dem Erkalten der Sohle verklebt ist. Durch die gute Verbindung des Sohlenmaterials mit der Oberschicht einerseits und mit der Funktionsschicht andererseits kann eindringendes Wasser wirksam vermieden werden.

Besonders vorteilhaft ist es hierbei, wenn ein Flächengebilde ausgewählt wird, welches derart porös ist, daß es vom Sohlenmaterial durchdrungen werden kann, und daß das Anspritzen der Sohle derart erfolgt, daß das Sohlenmaterial das Flächengebilde durchdringt und das Flächengebilde erschmilzt und das Sohlenmaterial mit dem umgeschlagenen Teil des Futters zur Innenseite des Schuhs hin eine stete Fläche bildet. Hierbei einsteht ein einheitliches Fußbett ohne Kanten und Vorsprünge, so daß über dieses Verfahren Schuhe mit sehr hohem Komfort zur Verfügung gestellt werden können.

Auch kann es von Vorteil sein, wenn der umgeschlagene Teil des Futters mit dem Flächengebilde zumindest stellenweise verklebt wird, bevor die Sohle angespritzt wird. Durch das vorherige Ankleben kann das Futter auf einfache Weise bereits vor dem Anspritzen faltenfrei ausgebildet und fixiert werden, so daß nicht nur im Sohlenbereich sondern auch im Bereich des umgeschlagenen Futters eine glatte Ausbildung des Fußbettes erfolgt. Hierzu genügt in der Regel eine stellenweise Verklebung des Futters mit dem Flächengebilde. In besonderen Fällen kann es aber erforderlich sein, den umgeschlagenen Teil des Futters mit dem Flächengebilde flächig zu verkleben.

Die gestellte Aufgabe wird auch gelöst durch einen Schuh welcher nach dem erfindungsgemäßen Verfahren hergestellbar ist. Dieser zeichnet sich durch leichtes Gewicht und durch hohen Tragekomfort aus. Bei Schuhen, die im Futter eine wasserdichte, wasserdampdurchlässige Funktionsschicht enthalten, zeichnet sich der erfindungsgemäße Schuh durch besonders hohe Zuverlässigkeit hinsichtlich Wasserdichtigkeit kombiniert mit hoher mechanischer Belastbarkeit aus.

Die Erfindung wird anhand der nachfolgenden Figuren, die zeichnerisch die vorliegende Erfindung vereinfacht darstellen, näher erläutert.

**Es zeigen:**
Figur 1 einen Teilquerschnitt durch einen nach dem erfindungsgemäßen Verfahren hergestellten Schuh mit angespritzter Sohle und einem Futter mit Funktionsschicht,
Figur 2 eine Unteransicht eines Schuhwerks, welches nach dem erfindungsgemäßen Verfahren zum Anspritzen der Sohle vorbereitet ist,
Figur 3 Querschnitt B-B des Schuhwerks gemäß Figur 2
Figur 4 eine Unteransicht eines weiteren Schuhwerks, welches nach dem erfindungsgemäßen Verfahren zum Anspritzen der Sohle vorbereitet ist.

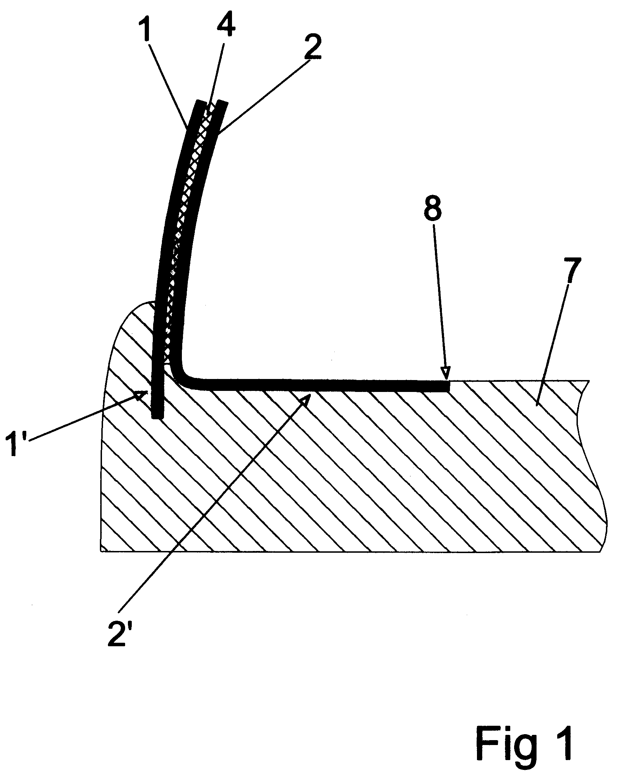

Gemäß Figur 1 besteht der im Teilquerschnitt dargestellte Schuh aus einer Wollfutterschicht 2, die eine wasserdichte, wasserdampfdurchlässige Funktionsschicht enthält und eine Membran aus Copolyetherester mit einer Vielzahl von wiederkehrenden intralinearen langkettigen und kurzkettigen Estereinheiten, die statistisch über Esterbindungen Kopf an Schwanz verknüpft sind (SYMPATEX), ist, einem Obermaterial 1 und einer angespritzten Sohle 7. Das Futter mit der Funktionsschicht 2 kann beispielsweise über einen Kleber 4 , der bevorzugt wasserdampfdurchlässig ist, verbunden sein. Das Futter mit seiner Funktionsschicht ist um den Bereich 2' länger als das Obermaterial und nach innen derart umgeschlagen, daß der umgeschlagene Teil des Futters zumindest in etwa parallel zur flächigen Erstreckung der Sohle ausgerichtet ist. Das Sohlenmaterial bildet zur Innenseite des Schuhs eine ebene Fläche und springt im Bereich 8 nach unten, so daß der umgeschlagene Teil des Futters mit der Innenseite der Laufsohle eine stete Fläche bildet, das heißt, daß im Bereich 8 keine Kante und zwischen dem umgeschlagenen Teil des Futters und der Innenseite der Sohle keine nennenswerte Lücke feststellbar ist (in der Zeichnung ist der Übersicht halber eine Lücke sichtbar). Das zur Sohle gerichtete Ende 1' des Obermaterials 1 ist vollständig in das Sohlenmaterial eingebettet. Da durch das erfindungsgemäße Verfahren das zur Formhaltung eingesetzte Flächengebilde schmilzt und in der Regel fein verteilt im Sohlenmaterial enthalten ist, also lediglich bei starker Vergrößerung im Schnitt durch die Sohle zu finden ist, wurde auf die Darstellung des fein verteilten Materials des Flächengebildes in Figur 1 ebenso verzichtet wie auf die Darstellung der Naht, mit welcher das Obermaterial mit dem Flächengebilde während des Herstellprozesses verbunden war.

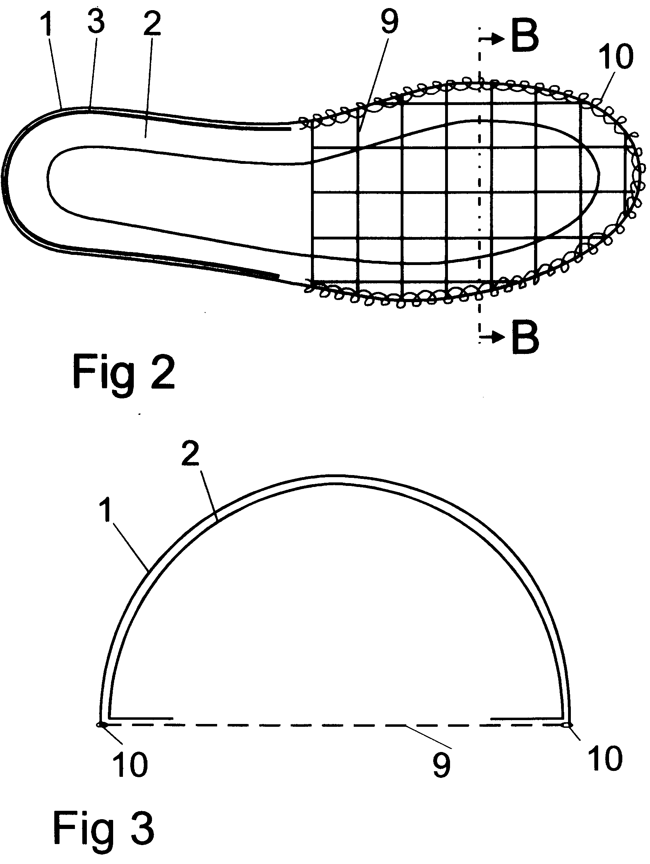

Figur 2 zeigt eine Untersicht auf ein nach dem erfindungsgemäßen Verfahren zum Anspritzen der Sohle vorbereitetes Schuhwerk. Mit 1 ist wiederum das Obermaterial bezeichnet, welches im Fersenteil durch eine Hinterkappe 3 verstärkt ist. Der umgeschlagene Teil des Futters ist mit 2 bezeichnet. Vom Gelenkbereich bis zur Spitze ist als Flächengebilde ein Gitter 9 aus beispielsweise Polyäthylenfäden, die einen Schmelzbereich von etwa 135 °C aufweisen, mit einem Nähfaden 10 an die Unterkante des Obermaterials 1 angestrobelt (Strobeln ist die im Schuhhandwerk übliche Bezeichnung für Nähen). Das Gitter 9 ist in der Figur lediglich schematisch dargestellt und weist in der Regel kleinere Öffnungen, als es hier dargestellt ist, auf. Die Größe der Öffnungen sollte jedoch mindestens so groß gewählt werden, daß das flüssige Sohlenmaterial beim Anspritzen der Sohle ohne große Behinderung durch die Öffnungen des Gitters fließen kann. In Figur 3 ist das in Figur 2 dargestellte Schuhwerk im Schnitt B-B dargestellt, wobei gleiche Nummern gleiche Teile bedeuten.

Zum Anspritzen der Sohlen wird ein mit einem Trennmittel versehener Leisten in den Schuh eingeführt, und der so vorbereitete Schuh mit seiner Unterseite in eine Spritzgießform eingesetzt. Beim Einspritzen des Sohlenmaterials dringt dieses in die Form ein, hält am Randbereich die Unterkante des Obermaterials fest und strömt durch das Gitter 9 bis zum Leisten vor. Hierbei umströmt das Sohlenmaterial das Gitter 9, wodurch das Gitter schmilzt, wonach die Sohlenspritzmasse abgekühlt wird und somit erstarrt.

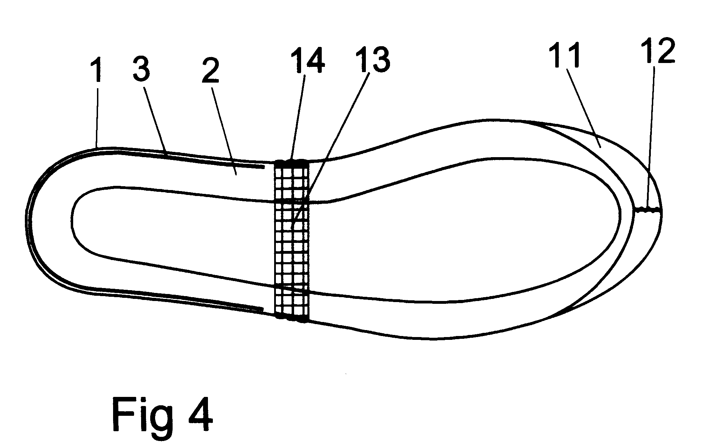

In Figur 4 ist eine weitere Untersicht auf ein nach dem erfindungsgemäßen Verfahren zum Anspritzen der Sohle vorbereitetes Schuhwerk dargestellt. Hierbei ist als Flächengebilde lediglich ein schmaler Streifen 13 eines Gitters vorgesehen, welcher über die Naht 14 an das Obermaterial angestrobelt ist. Die Naht 14 befindet sich im Gelenkbereich des dargestellten Schuhwerks. Bei dieser Ausführungsform ist das Obermaterial im Spitzenbereich 11 eingeschnitten und mit einer Naht 12 vernäht. Die Formgebung des Obermaterials wird im Spitzenbereich durch die Naht 12, im Gelenkbereich durch den Streifen 13 und im Fersenbereich durch die Hinterkappe 3 gewährleistet. Auch hier schmilzt der Streifen 13 und gegebenenfalls die Naht 14 und/oder 12 beim Anspritzen der Sohle.

Wie bereits ausgeführt läßt sich das erfindungsgemäße Verfahren auf alle Schuhe, die eine angespritzte Sohle aufweisen sollen, anwenden. Das erfindungsgemäße Verfahren gelingt vorzüglich bei Schuhen, die ein Futter mit einer wasserdichten, wasserdampfdurchlässigen Funktionsschicht, wie sie beispielsweise unter der Marke SYMPATEX bekannt geworden ist, aufweisen. In allen Ausführungsformen mit Funktionsschicht erweisen sich die nach dem erfindungsgemäßen Verfahren hergestellten Schuhe als wasserdicht und in hervorragender Weise geeignet, die Fußfeuchtigkeit vom Schuhwerkinnenbereich nach außen diffundieren zu lassen, so daß die durch Ansammlung von Feuchtigkeitsnestern häufig anzutreffenden Pilz- und Bakterieninfektionen nicht feststellbar sind.

## Patentansprüche

1. Verfahren zur Herstellung eines Schuhs, der zumindest aus einer Oberschicht und einer an die Oberschicht angespritzten Sohle besteht, wobei die Oberschicht geformt und zumindest ein Teil der zur Sohlenseite hin gewandten Oberschicht zur Formhaltung mit einem Flächengebilde verbunden wird, und wobei ein Material für die anzuspritzende Sohle derart auf eine Temperatur T1 erhitzt wird, daß es in den flüssigen Zustand überführt ist, und wobei das in flüssigen Zustand überführte Material als Sohle angespritzt und dann abgekühlt wird, dadurch gekennzeichnet, daß als Flächengebilde ein solches ausgewählt wird, welches eine Schmelztemperatur T2 aufweist, die kleiner als T1 ist, und daß nach dem Verbinden dieses Flächengebildes mit der Oberschicht die Sohle mit dem auf Temperatur T1 erhitzten Material derart angespritzt wird, daß das mit der Oberschicht verbundene Flächengebilde schmilzt.

2. Verfahren nach Anspruch 1, dadurch gekennzeichnet, daß die Oberschicht während des Anspritzens der Sohle von außen auf Form gehalten wird.

3. Verfahren nach Anspruch 1 oder 2, dadurch gekennzeichnet, daß zum Anspritzen der Sohle eine Spritzgießform eingesetzt wird, die so ausgebildet ist, daß das flüssige Sohlenmaterial zunächst von außen an die Oberschicht herangeführt wird, so daß das Sohlenmaterial selbst das Obermaterial bis zur Aushärtung der Sohle auf Form hält.

4. Verfahren nach einem oder mehreren der Ansprüche 1 bis 3, dadurch gekennzeichnet, daß für das Flächengebilde ein poröses, vom Sohlenmaterial durchdringbares Flächengebilde ausgewählt wird.

5. Verfahren nach einem oder mehreren der Ansprüche 1 bis 4, dadurch gekennzeichnet, daß für das Flächengebilde ein Flächengebilde, welches das Flächengebilde durchdringende Öffnungen aufweist, ausgewählt wird.

6. Verfahren nach einem oder mehreren der Ansprüche 1 bis 5, dadurch gekennzeichnet, daß für das Flächengebilde ein Flächengebilde aus einem thermoplastischen Material ausgewählt wird.

7. Verfahren nach einem oder mehreren der Ansprüche 1, bis 6, dadurch gekennzeichnet, daß als Flächengebilde ein Netz ausgewählt wird.

8. Verfahren nach einem oder mehreren der Ansprüche 1 bis 6, dadurch gekennzeichnet, daß als Flächengebilde ein textiles Flächengebilde ausgewählt wird.

9. Verfahren nach einem oder mehreren der Ansprüche 1 bis 8, dadurch gekennzeichnet, daß zur Verbindung das Flächengebilde mit der Oberschicht vernäht wird.

10. Verfahren nach Anspruch 9, dadurch gekennzeichnet, daß zum Vernähen des Flächengebildes mit der Oberschicht ein Nähfaden verwendet wird, dessen Schmelztemperatur T3 kleiner ist, als die Temperatur T1 des flüssigen Materials beim Anspritzen der Sohle.

11. Verfahren nach Anspruch 10, dadurch gekennzeichnet, daß die Schmelztemperatur T3 des Nähfadens mindestens 5 ºC niedriger eingestellt wird als die Temperatur T1 des Sohlenmaterials beim Anspritzen.

12. Verfahren nach Anspruch 11, dadurch gekennzeichnet, daß die Schmelztemperatur T3 des Nähfadens zwischen 10 und 25 ºC niedriger eingestellt wird als die Temperatur T1 des Sohlenmaterials beim Anspritzen.

13. Verfahren nach einem oder mehreren der Ansprüche 1 bis 12, dadurch gekennzeichnet, daß die Schmelztemperatur T2 des Flächengebildes mindestens 5 ºC niedriger eingestellt wird als die Temperatur T1 des Sohlenmaterials beim Anspritzen.

14. Verfahren nach Ansprüche 13, dadurch gekennzeichnet, daß die Schmelztemperatur T2 des Flächengebildes zwischen 8 und 25 ºC niedriger eingestellt wird als die Temperatur T1 des Sohlenmaterials beim Anspritzen.

15. Verfahren nach einem oder mehreren der Ansprüche 1 bis 14, daß als Material für das Flächengebilde und/oder den Nähfaden Polyäthylen, Polypropylen, Polyester oder Polyamid ausgewählt wird.

16. Verfahren nach einem oder mehreren der Ansprüche 1 bis 15, dadurch gekennzeichnet, daß auf der Innenseite des Obermaterials ein Futter, welches eine wasserdichte, wasserdampfdurchlässige Funktionsschicht enthält, derart angeordnet wird, daß das Futter mit der Funktionschicht die Oberschicht in Richtung der Sohle überragt, daß das überragende Ende des Futters mit der Funktionsschicht nach innen umgeschlagen wird, bevor das Flächengebilde mit der Oberschicht verbunden wird, und daß das Anspritzen der Sohle derart erfolgt, daß das umgeschlagene Ende des Futters mit der Funktionsschicht mit dem erschmolzenen Flächengebilde und/oder mit dem Sohlenmaterial nach dem Erkalten der Sohle verklebt ist.

17. Verfahren nach Anspruch 16, dadurch gekennzeichnet, daß ein Flächengebilde ausgewählt wird, welches derart porös ist, daß es vom Sohlenmaterial durchdrungen werden kann, und daß das Anspritzen der Sohle derart erfolgt, daß das Sohlenmaterial das Flächengebilde durchdringt und das Flächengebilde erschmilzt und das Sohlenmaterial mit dem umgeschlagenen Teil des Futters zur Innenseite des Schuhs hin eine stete Fläche bildet.

18. Verfahren nach Anspruch 16 oder 17, dadurch gekennzeichnet, daß der umgeschlagene Teil des Futters mit dem Flächengebilde zumindest stellenweise verklebt wird, bevor die Sohle angespritzt wird.

19. Schuh, hergestellbar nach dem Verfahren gemäß einem oder mehreren der Ansprüche 1 bis 18.
